# EUROPEAN PATENT APPLICATION

(11) **EP 3 333 327 A1**
(43) Date of publication of application: **13.06.2018**
(21) Application number: 16203325.2
(22) Date of filing: 10.12.2016
(51) Int. Cl.: E02F 3/90, B63B 35/34, E02B 8/02, E02F 3/88, E02F 9/06

(54) **AUTONOMOUS DREDGING VEHICLE FOR DREDGING A DAM RESERVOIR**

(71) Applicant: Imotec Holding B.V., 7521 PH Enschede (NL)
(72) Inventor: Peters, Jan, 7325 NH Apeldoorn (NL)
(74) Representative: 't Jong, Bastiaan Jacob

(57) **Abstract**

The invention relates to an autonomous dredging vehicle for dredging a dam reservoir (4), which dredging vehicle comprises:
- a floating body (6), like a pontoon;
- propelling means (7,8) for propelling the floating body through the dam reservoir;
- a suction head (13) arranged to a first end of a first hose (12) for sucking up slurry, wherein the other end of the first hose is arranged to the floating body;
- a discharge pipe (15) for downward hanging arrangement to outside of the dam;
- a second hose (14) arranged with one end in fluid connection to the discharge pipe and with the other end arranged to the floating body and in fluid connection with the first hose;
- a controllable dosing means (38,39) for controlling the flow rate of slurry (40) being discharged by the discharge pipe;
- a density and flow sensor (10) arranged in the fluid path between the suction head and the discharge pipe;
- control means (42) for controlling the propelling means to move the floating body autonomously over the reservoir and for controlling the controllable dosing means such that the flow rate of slurry being discharged by the discharge pipe remains below a preset threshold.

## Description

The invention relates to an autonomous dredging vehicle for dredging a dam reservoir.

When a reservoir is made by arranging a dam in a feeding stream, the dam will typically allow for the sediments carried by the feeding stream to settle on the bottom of the reservoir. After time, the capacity of the reservoir will be reduced considerable by the sediments settling on the bottom.

Furthermore, the downstream river may erode faster, than without the dam, as the sediments captured by the reservoir cannot settle in the downstream river.

It is known to dredge a reservoir in order to restore the capacity of the reservoir. This is however a costly operation as a dredger needs to be transported to the top of the reservoir, which is often in an impassable mountain area. Also all the required fuel for such a dredger needs to be transported into the mountains. And when the dredger is dredging the reservoir all of the slurry needs to be discarded at a suitable location. Generally, this requires transporting the slurry to an off-site location, which will be costly.

JPH01315514 discloses dredging using a siphon, such that water with sediment is sucked up by a suction head, transported via a hose and then siphoned over the edge of the dam. In order to avoid the reservoir from depleting to rapidly, a controllable opening is provided in the hose to allow air to enter the hose and provide an air control for controlling the flow in the hose.

The slurry discarded outside of the dam needs to be collected, as the amount of slurry typically cannot be fed to the downstream river, as the downstream river would not have a sufficient sediment carrying capacity. So, also with this prior art, the slurry needs to be transported to an off-site location.

EP 2134902 discloses a system for dredging a reservoir and adding slurry to the downstream river. An autonomous pontoon is moved over the water of the reservoir and sediment is sucked up by a suction head. The sucked up sediment is dumped on the bottom of the reservoir near the outflow opening. Due to the flow near the outflow opening some of the sediment is taken along with the flow and into the downstream river.

This process is however difficult to control and if the slurry is dumped too close at the outflow opening, the sediment carrying capacity of the downstream river could be exceeded easily, while if the slurry is dumped too far of the outflow opening, the amount of sediment carried into the downstream river is too low and the dredging of the reservoir does not maintain or increase the capacity of the reservoir.

It is therefor an object to reduce or even remove the above mentioned disadvantages.

This object is achieved according to the invention with an autonomous dredging vehicle for dredging a dam reservoir, which dredging vehicle comprises:
- a floating body, like a pontoon;
- propelling means for propelling the floating body through the dam reservoir;
- a suction head arranged to a first end of a first hose for sucking up slurry, wherein the other end of the first hose is arranged to the floating body;
- a discharge pipe for downward hanging arrangement to outside of the dam;
- a second hose arranged with one end in fluid connection to the discharge pipe and with the other end arranged to the floating body and in fluid connection with the first hose;
- a controllable dosing means for controlling the flow rate of slurry being discharged by the discharge pipe;
- a density and flow sensor arranged in the fluid path between the suction head and the discharge pipe;
- control means for controlling the propelling means to move the floating body autonomously over the reservoir and for controlling the controllable dosing means such that the flow rate of the slurry being discharged by the discharge pipe remains below a preset threshold.

With the autonomous dredging vehicle it is possible to adjust the amount of slurry sucked up by the suction head and discarded via the discharge pipe to match the sediment carrying capacity of the downstream river. As a result it is no longer necessary to transport the dredged slurry to an off-site location.

If the amount of slurry which can be added to the downstream river is limited, the dredging vehicle will not be able to always operate at full capacity. By having the control means to control the propelling means to move the floating body autonomously, it is not required to have an operator on board of the vehicle while dredging. It further allows for 24/7 operation of the dredging vehicle, which ensures a steady flow of slurry to the downstream river.

Furthermore, by using a discharge pipe arranged downward hanging on the outside of the dam, a siphoning action is obtained, such that less or no external power is required during the dredging for the pumping action in the suction head and hoses.

In an embodiment of the dredging vehicle according to the invention the dosing means comprise a controllable valve arranged in the flow path between the suction head and the discharge pipe, wherein the controllable valve is controlled based on the measurements of the density and flow sensor.

With the controllable valve a direct control is possible between the amount of slurry being sucked up by the suction head and being discharged into the downstream river by the discharge pipe.

In a preferred embodiment of the dredging vehicle according the invention the dosing means comprise a buffer arranged in the discharge pipe and pumping means for pumping slurry from the buffer further into the discharge pipe, wherein the control means control the pumping means.

If direct control is not possible by using a controllable valve, a buffer can be arranged according to the invention in the discharge pipe, such that the flow rate of the slurry being sucked up does not need to correspond to the flow rate of the slurry being discharged by the discharge pipe. By controlling the pumping means, still it is possible to control the flow rate of slurry being discharged into the downstream river, even if the supply of slurry into the buffer varies.

In a preferred embodiment of the dredging vehicle according to the invention the propelling means comprise at least two winches arranged to one of the floating body or the shore of the reservoir and wherein the free cable end of each winch is arranged to the other of the floating body or the shore of the reservoir or to an anchor on the bottom.

By arranging cables between the floating body and the shore of the reservoir, it is possible to reliably move the floating body simply by operating the winches. The position of the floating body will not be dependent on currents or wind.

Preferably, the winches are solar powered or powered by the energy generated by the dam. This provides for an environmental friendly and low cost dredging solution. The solar power or energy generated by the dam could also be used for powering the control means, density and flow sensor and other components of the dredging vehicle.

In a further preferred embodiment of the dredging vehicle according to the invention the cables of the winches extend largely below water level of the reservoir.

As a reservoir is often used for recreational purposes, having cables extending just above the water level would be dangerous or at least limit the possibilities of the reservoir. By arranging the cables below water level, preferably a few meters deep, boats can sail freely over the reservoir.

Yet another embodiment of the dredging vehicle according to the invention further comprises an air pump with an outlet debouching in the first hose to provide an airlift pump.

If the hoses are empty, or at least the siphoning action is not present, it is necessary to pump some water through the hoses to initiate the siphoning action. Providing a conventional pump only for this purpose would be costly, especially as such a pump needs to withstand the slurry.

By providing an air pump with an outlet in the first hose, a so called air lift is provided, which will propel the water in the first hose, which flows through the second hose and the discharge pipe and will initiate the siphoning action. The advantage of using air, is that the air pump will be unaffected by the slurry in the hose.

The invention also relates to a method for preventing erosion of a river downstream of a reservoir by using a dredging vehicle according to the invention, which method comprises the steps of:
- determining the sediment carrying capacity of the downstream river;
- providing a dredging vehicle according to any of the preceding claims in the reservoir;
- arranging the discharge pipe downward hanging to outside of the dam of the reservoir, wherein the discharge pipe discharges in the downstream river
- controlling the dosing means of the dredging vehicle, such that the flow rate of slurry being discharged by the discharge pipe remains below a preset threshold.

These and other features of the invention will be elucidated in conjunction with the accompanying drawings.
Figure 1 shows a perspective view of a reservoir with a dredging vehicle according to the invention.
Figure 2 shows a cross-section of figure 1.
Figure 3 shows a schematic cross-section of a second embodiment according to the invention.

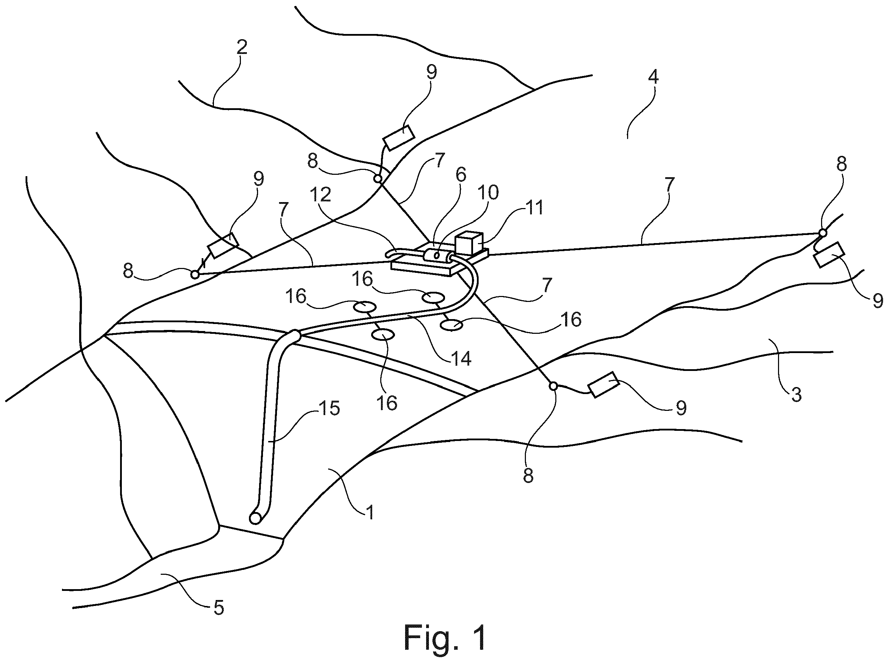

Figure 1 shows a dam 1 arranged between two slopes 2, 3 of a mountain area. A reservoir 4 is present behind the dam 1, while in front of the dam 1 a downstream river 5 flows.

A floating body 6 floats on the reservoir 4 and is connected to cables 7, which are attached with a free end to the floating body 6 and with the other end to winches 8. Each winch 8 is powered by a solar panel 9. The winches 8 could also be provided on the floating body 6 and the free ends would then be arranged to the shore of the reservoir 4 or on the bottom of the reservoir 4 with an anchor.

A density and flow sensor 10 with an included valve is arranged on the floating body 6 as well as a housing 11 for control means for reading the sensor 10 data, controlling the valve and controlling the winches 8.

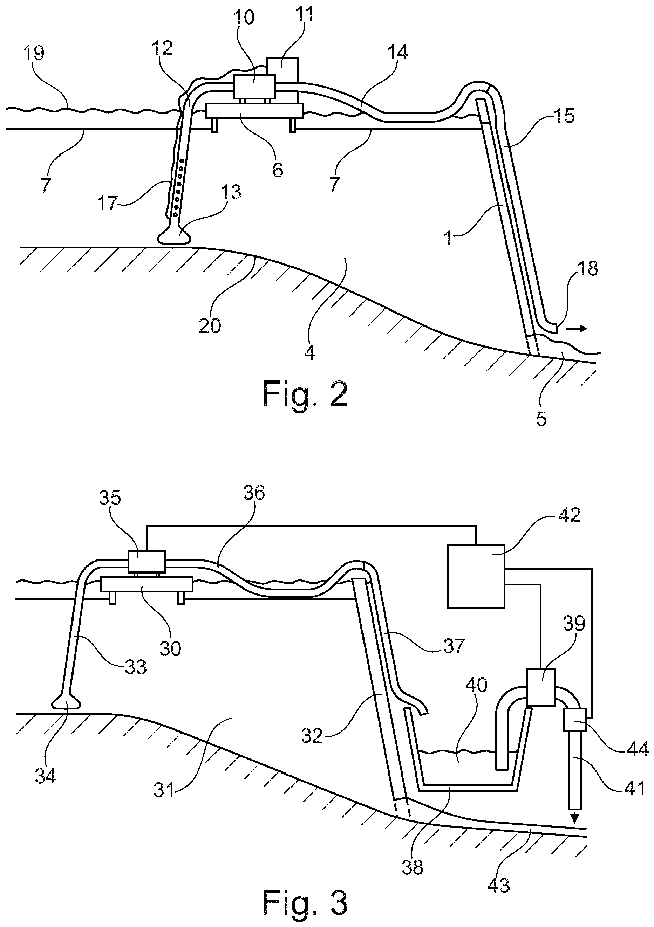

A first hose 12 is in fluid connection with one end to the density and flow sensor 10 and is on the other end provided with a suction head 13. (see figure 2). A second hose 14 is provided on the other side of the density sensor 10 and leads to a discharge pipe 15, which hangs on the outside of the dam 1 downward. The second hose 14 is provided with floaters 16.

A pneumatic line 17 runs from an air pump in the housing 11 to the suction head 13 to inject air into the first hose 12 and to provide an air lift to initiate the siphoning action of the first hose 12, the second hose 14 and the discharge pipe 15 of which the outlet 18 is lower than the inflow opening of the suction head 13.

The cables 7 are arranged to the floating body 6 below the water level 19 of the reservoir 4, such that boats and the like are not hindered by the cables.

The control means arranged in the housing 11 will control the winches 8, such that the floating body 6 can be positioned on the water surface 19 of the reservoir 4 and accordingly position the suction head 13 over the bottom 20 of the reservoir 4.

The control means further control the valve integrated in the density and flow sensor 10 based on the measurements thereof, to ensure that sufficient, but not too much slurry is fed via the discharge pipe 15 into the downstream river 5. This threshold amount of slurry is based on a predetermined sediment carrying capacity of the downstream river 5.

Figure 3 shows a schematic cross-section of a second embodiment according to the invention. A pontoon 30 is arranged floating in the reservoir 31 of a dam 32. A first hose 33 with a suction head 34 is arranged on to the pontoon 30 to a density and flow sensor 35. A second hose 36 runs from this sensor 35 to a first discharge pipe 37, which hangs outside of the dam 32.

The first discharge pipe 37 debouches in a buffer reservoir 38. This buffer reservoir 38 has a pump 39, which pumps the slurry 40 collected in the reservoir 38 through the second discharge pipe 41. The second discharge pipe 41 has a second density and flow sensor 44.

Control means 42 register the data of the density and flow sensor 35, such that is known how much slurry is collected in the buffer reservoir 38. The control means 42 further register the data of the second density and flow sensor 44 and control the pump 39 such that the amount of slurry added to the downstream river 43 can precisely dosed.

## Claims

1. Autonomous dredging vehicle for dredging a dam reservoir, which dredging vehicle comprises:
- a floating body, like a pontoon;
- propelling means for propelling the floating body through the dam reservoir;
- a suction head arranged to a first end of a first hose for sucking up slurry, wherein the other end of the first hose is arranged to the floating body;
- a discharge pipe for downward hanging arrangement to outside of the dam;
- a second hose arranged with one end in fluid connection to the discharge pipe and with the other end arranged to the floating body and in fluid connection with the first hose;
- a controllable dosing means for controlling the flow rate of slurry being discharged by the discharge pipe;
- a density and flow sensor arranged in the fluid path between the suction head and the discharge pipe;
- control means for controlling the propelling means to move the floating body autonomously over the reservoir and for controlling the controllable dosing means such that the flow rate of slurry being discharged by the discharge pipe remains below a preset threshold.

2. Dredging vehicle according to claim 1, wherein the dosing means comprise a controllable valve arranged in the flow path between the suction head and the discharge pipe, wherein the controllable valve is controlled based on the measurements of the density and flow sensor.

3. Dredging vehicle according to claim 1, wherein the dosing means comprise a buffer arranged in the discharge pipe and pumping means for pumping slurry from the buffer further into the discharge pipe, wherein the control means control the pumping means.

4. Dredging vehicle according to any of the preceding claims , wherein the propelling means comprise at least two winches arranged to one of the floating body or the shore of the reservoir and wherein the free cable end of each winch is arranged to the other of the floating body or the shore of the reservoir.

5. Dredging vehicle according to claim 4, wherein the winches are solar powered.

6. Dredging vehicle according to claim 4 or 5, wherein the cables of the winches extend largely below water level of the reservoir.

7. Dredging vehicle according to any of the preceding claims, further comprising an air pump with an outlet debouching in the first hose to provide an airlift pump.

8. Method for preventing erosion of a river downstream of a reservoir by using a dredging vehicle according to any of the preceding claims, which method comprises the steps of:
- determining the sediment carrying capacity of the downstream river;
- providing a dredging vehicle according to any of the preceding claims in the reservoir;
- arranging the discharge pipe downward hanging to outside of the dam of the reservoir, wherein the discharge pipe discharges in the downstream river
- controlling the dosing means of the dredging vehicle, such that the flow rate of slurry being discharged through the discharge pipe into the river remains below a preset threshold.
